# EUROPEAN PATENT APPLICATION

(11) **EP 4 637 067 A1**
(43) Date of publication of application: **22.10.2025**
(21) Application number: 22968286.9
(22) Date of filing: 16.12.2022
(51) Int. Cl.: H04L 5/00, H04W 72/04

(54) **RESOURCE DETERMINATION METHODS AND APPARATUSES, AND COMMUNICATION APPARATUS AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Dehns Germany Partnerschaft mbB
(86) International application number: PCT/CN2022/139787
(87) International publication number: WO 2024/124582

(57) **Abstract**

The present disclosure relates to the technical field of communications, in particular to resource determination methods and apparatuses, and a communication apparatus and a storage medium. A resource determination method comprises: determining a time domain unit where a subband for a first transmission direction is located, and determining a second transmission direction of the time domain unit; and according to the second transmission direction and the first transmission direction, determining a frequency domain resource that can be used to perform communication in the first transmission direction in the time domain unit. According to the present disclosure, a terminal can determine, according to a second transmission direction and a first transmission direction, a frequency domain resource that can be used to perform communication in the first transmission direction in a time domain unit, such that the communication in the first transmission direction is not limited to be performed only in a subband for the first transmission direction. On this basis, a frequency domain resource corresponding to a time domain unit where the subband for the first transmission direction is located can be fully utilized, thereby falicitating improvement to the scheduling flexibility and communication efficiency.

## Description

### TECHNICAL FIELD

The disclosure relates to the field of communication technologies, and in particular to methods and apparatus for determining a resource, a communication device, and a computer-readable storage medium.

### BACKGROUND

In order to realize full-duplex communication of a terminal, a network device may configure a subband in a slot for the terminal. For example, the network device may configure an uplink subband in a downlink slot for the terminal, such that the terminal may use frequency domain resources of the uplink subband in the downlink slot for an uplink communication, and/or use frequency domain resources outside the uplink subband for a downlink communication. However, there are some problems with the current way of using by the terminal the subband for communication.

### SUMMARY

Embodiments of the disclosure provide methods and apparatuses for determining a resource, a communication device, and a computer-readable storage medium, to solve technical problems existing in the related art.

In a first aspect according to embodiments of the disclosure, a method for determining a resource is provided. The method is performed by a terminal. The method includes: determining a time domain unit in which a subband of a first transmission direction is located, and determining a second transmission direction of the time domain unit; and determining, based on the second transmission direction and the first transmission direction, a frequency domain resource that is able to be used for communication of the first transmission direction in the time domain unit.

In a second aspect according to embodiments of the disclosure, a method for determining a resource is provided. The method is performed by a network device. The method includes: determining a time domain unit in which a subband of a first transmission direction configured for a terminal is located, and determining a second transmission direction of the time domain unit; and determining, based on the second transmission direction and the first transmission direction, a frequency domain resource that is able to be used for communication of the first transmission direction with the terminal in the time domain unit.

In a third aspect according to embodiments of the disclosure, an apparatus for determining a resource is provided. The apparatus includes: a processing module, configured to determine a time domain unit in which a subband of a first transmission direction is located, and determine a second transmission direction of the time domain unit; and determine, based on the second transmission direction and the first transmission direction, a frequency domain resource that is able to be used for communication of the first transmission direction in the time domain unit.

In a fourth aspect according to embodiments of the disclosure, an apparatus for determining a resource is provided. The apparatus includes a processing module, configured to determine a time domain unit in which a subband of a first transmission direction configured for a terminal is located, and determine a second transmission direction of the time domain unit; and determine, based on the second transmission direction and the first transmission direction, a frequency domain resource that is able to be used for communication of the first transmission direction with the terminal in the time domain unit.

In a fifth aspect according to embodiments of the disclosure, a system for determining a resource is provided. The system includes a terminal and a network device. The terminal is configured to perform the above-mentioned method for determining a resource and the network device is configured to perform the above-mentioned method for determining a resource.

In a sixth aspect according to embodiments of the disclosure, a communication device is provided. The communication device includes a processor and a memory for storing a computer program. When the computer program is executed by the processor, the method for determining a resource performed by a terminal is implemented.

In a seventh aspect according to embodiments of the disclosure, a communication device is provided. The communication device includes a processor and a memory for storing a computer program. When the computer program is executed by the processor, the method for determining a resource performed by a network device is implemented.

In an eighth aspect according to embodiments of the disclosure, a computer-readable storage medium having a computer program stored thereon is provided. When the computer program is executed by a processor, the method for determining a resource performed by a terminal is implemented.

In a ninth aspect according to embodiments of the disclosure, a computer-readable storage medium having a computer program stored thereon is provided. When the computer program is executed by a processor, the method for determining a resource performed by a network device is implemented.

According to embodiments of the disclosure, after the terminal is configured, by the network device, with the subband of the first transmission direction, the time domain unit where the subband of the first transmission direction is located may be determined, and the second transmission direction of the time domain unit where the subband is located may be determined. Then, the frequency domain resource that may be used for the communication of the first transmission direction in the time domain unit may be determined based on the second transmission direction and the first transmission direction. In other words, the terminal may determine, based on the second transmission direction and the first transmission direction, whether to perform the communication of the first transmission direction within the subband of the time domain unit or to perform the communication of the first transmission direction on all frequency domain resources corresponding to the time domain unit. Therefore, the communication of the first transmission direction is not limited to being performed within the subband of the first transmission direction in the disclosure. Accordingly, the frequency domain resources corresponding to the time domain unit where the subband of the first transmission direction is located may be fully utilized, which is conducive to improving scheduling flexibility and communication efficiency.

### BRIEF DESCRIPTION OF THE DRAWINGS

In order to clearly illustrate the technical solutions in embodiments of the disclosure, the drawings required for use in the description of embodiments will be briefly introduced below. Obviously, the drawings described below are only some embodiments of the disclosure. For those skilled in the art, other drawings may be obtained based on these drawings without paying creative labor.
FIG. 1 is a schematic flowchart illustrating a method for determining a resource according to an embodiment of the disclosure.
FIG. 2 is a schematic flowchart illustrating another method for determining a resource according to an embodiment of the disclosure.
FIG. 3 is a schematic flowchart illustrating still another method for determining a resource according to an embodiment of the disclosure.
FIG. 4 is a schematic flowchart illustrating yet another method for determining a resource according to an embodiment of the disclosure.
FIG. 5A is a schematic diagram illustrating a slot according to an embodiment of the disclosure.
FIG. 5B is a schematic diagram illustrating another slot according to an embodiment of the disclosure.
FIG. 5C is a schematic diagram illustrating a subband according to an embodiment of the disclosure.
FIG. 6A is a schematic diagram illustrating slot according to an embodiment of the disclosure.
FIG. 6B is a schematic diagram illustrating another slot according to an embodiment of the disclosure.
FIG. 6C is a schematic diagram illustrating a subband according to an embodiment of the disclosure.
FIG. 7A is a schematic diagram illustrating a slot according to an embodiment of the disclosure.
FIG. 7B is a schematic diagram illustrating a subband according to an embodiment of the disclosure.
FIG. 8A is a schematic diagram illustrating a symbol according to an embodiment of the disclosure.
FIG. 8B is a schematic diagram illustrating a subband according to an embodiment of the disclosure.
FIG. 8C is a schematic diagram illustrating an interaction between a terminal and a network device according to an embodiment of the disclosure.
FIG. 9 is a schematic flowchart illustrating a method for determining a resource according to an embodiment of the disclosure.
FIG. 10 is a schematic flowchart illustrating another method for determining a resource according to an embodiment of the disclosure.
FIG. 11 is a schematic flowchart illustrating yet another method for determining a resource according to an embodiment of the disclosure.
FIG. 12 is a schematic flowchart illustrating yet another method for determining a resource according to an embodiment of the disclosure.
FIG. 13 is a block diagram illustrating an apparatus for determining a resource according to an embodiment of the disclosure.
FIG. 14 is a block diagram illustrating an apparatus for determining a resource according to an embodiment of the disclosure.
FIG. 15 is a block diagram illustrating an apparatus for determining a resource according to an embodiment of the disclosure.
FIG. 16 is a block diagram illustrating an apparatus for determining a resource according to an embodiment of the disclosure.

### DETAILED DESCRIPTION

The following will be combined with the drawings in embodiments of the disclosure to clearly and completely describe technical solutions in embodiments of the disclosure. Obviously, the described embodiments are only part of embodiments of the disclosure, not all embodiments. Based on embodiments in the disclosure, all other embodiments obtained by the skilled in the art without making creative work are within the scope of protection of the disclosure.

The terms used in embodiments herein are only for the purpose of describing specific embodiments and are not intended to limit embodiments. The singular forms of "a/an" and "the" used in embodiments and appended claims are also intended to include plural forms unless the context clearly indicates other meanings. It is understandable that the term "and/or" used herein refers to and includes any or all possible combinations of one or more associated listed items.

It is understandable that although the terms "first," second," "third," etc. may be used to describe various information in embodiments, the information should not be limited to these terms. These terms are only used to distinguish the same type of information from each other. For example, without departing from the scope of embodiments, the first information may also be referred to as the second information, and similarly, the second information may also be referred to as the first information. Depending on the context, the word "if" as used herein may be interpreted as "at the time of", "when" or "in response to determining".

For purposes of brevity and ease of understanding, the terms used herein to characterize size relationships are "greater than", "less than", "higher than" or "lower than". However, those skilled in the art may understand that the term "greater than" also covers the meaning of "greater than or equal to", the term "less than" also covers the meaning of "less than or equal to", the term "higher than" also covers the meaning of "higher than or equal to", and the term "lower than" also covers the meaning of "lower than or equal to".

In one embodiment, a network device may configure a subband of a first transmission direction for a terminal. The first transmission direction includes, but is not limited to, uplink and downlink. That is, the network device may configure an uplink subband for the terminal or the network device may configure a downlink subband for the terminal.

For example, in a case that the first transmission direction is uplink, in addition to configuring for the terminal that a transmission direction (also called a second transmission direction) of a time domain unit is downlink, the network device also configures an uplink subband in the downlink time domain unit (i.e., the network device configures the subband of the first transmission direction). In this case, if the network device is able to perform full-duplex communication and the terminal is able to perform half-duplex communication, then the terminal could perform uplink communication within the uplink subband in the downlink time domain unit or perform downlink communication on frequency domain resources outside the uplink subband. If both the network device and the terminal are able to perform full-duplex communication, then the terminal could perform uplink communication within the uplink subband in the downlink time domain unit and perform downlink communication on frequency domain resources outside the uplink subband.

For example, in a case that the first transmission direction is downlink, in addition to configuring for the terminal that a transmission direction (also called a second transmission direction) of a time domain unit is uplink, the network device also configures a downlink subband in the uplink time domain unit (i.e., the network device configures the subband of the second transmission direction). In this case, if the network device is able to perform full-duplex communication and the terminal is able to perform half-duplex communication, then the terminal could perform downlink communication within the downlink subband in the uplink time domain unit or perform uplink communication on frequency domain resources outside the downlink subband. If both the network device and the terminal are able to perform full-duplex communication, then the terminal could perform downlink communication within the downlink subband in the uplink time domain unit and perform uplink communication on frequency domain resources outside the downlink subband.

However, in configuring, by the network device, a subband for a terminal, there are some problems. For example, after the network device configures, in a time domain unit, a subband of the first transmission direction for the terminal, the terminal can perform communication of the first transmission direction only within the subband in the time domain unit and cannot perform communication of the first transmission direction on other frequency domain resources.

For example, in a case that the terminal is configured with an uplink subband, after the network device configures, for the terminal, the uplink subband in a downlink time domain unit, the terminal can perform uplink communication only within the uplink subband of the downlink time domain unit and cannot perform uplink communication on frequency domain resources outside the uplink subband. However, after the network device configures, for the terminal, the uplink subband in an uplink time domain unit, the terminal can perform downlink communication only within the uplink subband of the uplink time domain unit and cannot perform uplink communication on frequency domain resources outside the uplink subband, which will lead to a waste of frequency domain resources.

For example, in a case that a terminal is configured with a downlink subband, after the network device configures, for the terminal, the downlink subband in an uplink time domain unit, the terminal can perform downlink communication only within the downlink subband of the uplink time domain unit and cannot perform downlink communication on frequency domain resources outside the downlink subband. However, after the network device configures, for the terminal, the downlink subband in a downlink time domain unit, the terminal can perform downlink communication only within the downlink subband of the downlink time domain unit and cannot perform downlink communication on frequency domain resources outside the downlink subband, which will lead to a waste of frequency domain resources.

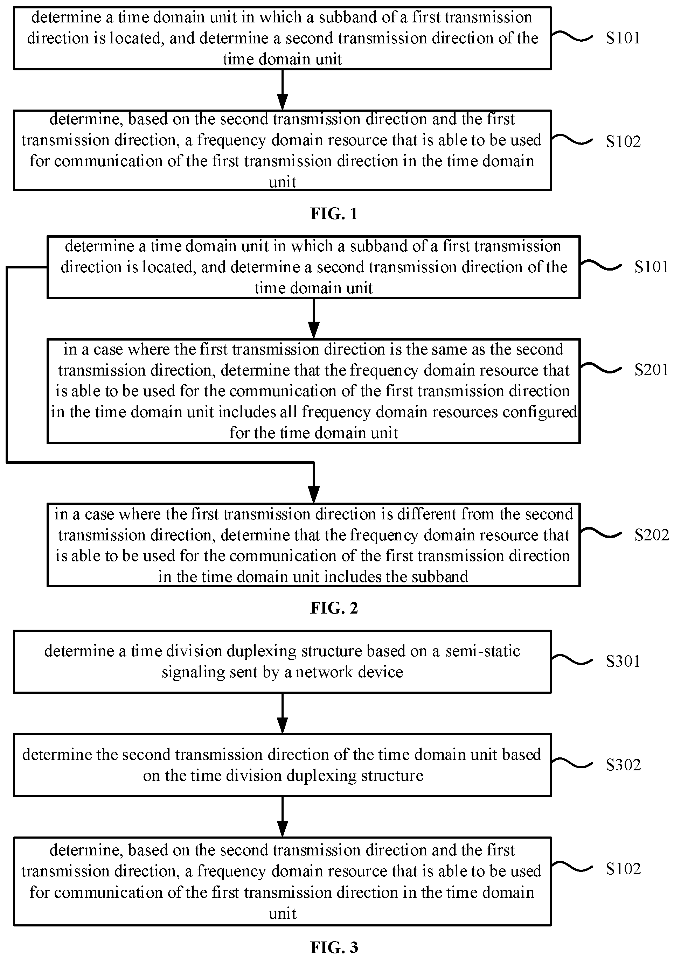

FIG. 1 is a schematic flowchart illustrating a method for determining a resource according to an embodiment of the disclosure. The method for determining a resource illustrated in this embodiment may be performed by a terminal. The terminal includes, but is not limited to, a communication device, such as a mobile phone, a tablet computer, a wearable device, a sensor, an Internet of Things device, or the like. The terminal may communicate with a network device. The network device includes, but is not limited to, a network device in a fourth generation (4G), fifth generation (5G), sixth generation (6G), and other communication systems, such as a base station, a core network, or the like.

As illustrated in FIG. 1, the method for determining a resource may include the following.

At block S101, a time domain unit in which a subband of a first transmission direction is located is determined, and a second transmission direction of the time domain unit is determined.

At block S102, frequency domain resource(s) that is/are able to be used for communication of the first transmission direction in the time domain unit is/are determined based on the second transmission direction and the first transmission direction.

In one embodiment, the first transmission direction may include at least one of: a transmission direction of an uplink (UL) time domain resource, for example, referred to as uplink; or a transmission direction of a downlink (UL) time domain resource, for example, referred to as downlink.

In one embodiment, the second transmission direction may include at least one of: a transmission direction of an uplink (UL) time domain resource, for example, referred to as uplink; a transmission direction of a downlink (UL) time domain resource, for example, referred to as downlink; or a transmission direction of a flexible time domain resource, for example, referred to as flexible.

In one embodiment, the time domain unit includes at least one of: a slot or a symbol. The symbol may be an Orthogonal Frequency Division Multiplexing (OFDM) symbol.

The slot may be a slot for full-duplex communication and may also be referred to as a Subband Full Duplex (SBFD) slot. In a case that the network device is able to perform the full-duplex communication and the terminal is able to perform half-duplex communication, in the slot for the full-duplex communication, the network device can simultaneously receive and send data and the terminal can send or receive data. In a case that the network device is able to perform the full-duplex communication and the terminal is able to perform the full-duplex communication, in the slot for the full-duplex communication, the network device can simultaneously receive and send data and the terminal can simultaneously receive and send data.

The symbol may be a symbol in a slot for full-duplex communication. In a case that the network device is able to perform the full-duplex communication and the terminal is able to perform the half-duplex communication, in the symbol for the full-duplex communication, the network device can simultaneously receive and send data and the terminal can send or receive data. In a case that the network device is able to perform the full-duplex communication and the terminal is able to perform the full-duplex communication, in the symbol for the full-duplex communication, the network device can simultaneously receive and send data and the terminal can simultaneously receive and send data.

According to embodiments of the disclosure, after the terminal is configured by the network device with a subband of the first transmission direction, the terminal may determine the time domain unit where the subband of the first transmission direction is located and determine the second transmission direction of the time domain unit where the subband is located. Further, the terminal may determine, based on the second transmission direction and the first transmission direction, the frequency domain resource(s) that is/are able to be used for the communication of the first transmission direction in the time domain unit. In other words, the terminal may determine, based on the second transmission direction and the first transmission direction, whether to perform the communication of the first transmission direction within the subband of the time domain unit or to perform the communication of the first transmission direction on all frequency domain resources corresponding to the time domain unit. Therefore, the communication of the first transmission direction is not limited to being performed within the subband of the first transmission direction in the disclosure. Accordingly, the frequency domain resources corresponding to the time domain unit where the subband of the first transmission direction is located may be fully utilized, which is conducive to improving scheduling flexibility and communication efficiency.

FIG. 2 is a schematic flowchart illustrating another method for determining a resource according to an embodiment of the disclosure. Determining, based on the second transmission direction and the first transmission direction, the frequency domain resource(s) that is/are able to be used for communication of the first transmission direction in the time domain unit includes a block S201 and/or a block S202.

At block S201, in a case where the first transmission direction is the same as the second transmission direction, it is determined that the frequency domain resource(s) that is/are able to be used the communication of the first transmission direction in the time domain unit include(s) all frequency domain resources configured for the time domain unit.

At block S202, in a case where the first transmission direction is different from the second transmission direction, it is determined that the frequency domain resource(s) that is/are able to be used for the communication of the first transmission direction in the time domain unit include(s) the sub-band.

In an embodiment, when the first transmission direction is the same as the second transmission direction, the terminal may determine that the frequency domain resource(s) that is/are able to be used for the communication of the first transmission direction in the time domain unit include(s) all the frequency domain resources configured for the time domain unit. That is, the terminal may perform the communication of the first transmission direction on all the frequency domain resources configured for the time domain unit, and the communication of the first transmission direction is not limited to being performed within the subband of the first transmission direction. Accordingly, the frequency domain resources corresponding to the time domain unit where the subband of the first transmission direction is located are fully utilized, which is conducive to improving scheduling flexibility and communication efficiency.

When the first transmission direction is different from the second transmission direction, the terminal determines that the frequency domain resource(s) that is/are able to be used for the communication of the first transmission direction in the time domain unit include(s) the subband. In an example, when the first transmission direction is different from the second transmission direction, the terminal determines that the frequency domain resource(s) that is/are able to be used for the communication of the first transmission direction in the time domain unit is/are the subband of the first transmission direction. That is, the terminal may perform the communication of the first transmission direction only within the subband. This case may meet the requirement that the terminal performs the communication of the first transmission direction within the subband of the first transmission direction.

In an embodiment, the first transmission direction being the same as the second transmission direction includes at least one of:
the first transmission direction being uplink and the second transmission direction being downlink; or
the first transmission direction being downlink and the second transmission direction being downlink.
In one embodiment, the first transmission direction being different from the second transmission direction includes at least one of:
the first transmission direction being downlink and the second transmission direction being uplink;
the first transmission direction being downlink and the second transmission direction being flexible;
the first transmission direction being uplink and the second transmission direction being downlink; or
the first transmission direction being uplink and the second transmission direction being flexible.

When the second transmission direction of the time domain unit is uplink, uplink communication may be performed within the time domain unit. When the second transmission direction of the time domain unit is downlink, downlink communication may be performed within the time domain unit. When the transmission direction of the time domain unit is flexible, uplink communication may be performed within the time domain unit or downlink communication may be performed within the time domain unit.

FIG. 3 is a schematic flowchart illustrating another method for determining a resource according to an embodiment of the disclosure. As illustrated in FIG. 3, determining the second transmission direction of the time domain unit includes the following.

At block S301, a time division duplexing structure is determined based on a first semi-static signaling sent by a network device.

At block S302, the second transmission direction of the time domain unit is determined based on the time division duplexing structure.

In an embodiment, the network device may configure a time division duplexing structure for the terminal through the first semi-static signaling. The time division duplexing structure indicates one or more transmission directions of one or more time domain units configured for the terminal. Therefore, the terminal may determine the transmission direction of the time domain unit based on the time division duplexing structure.

When the transmission direction of the time domain unit is determined based on the first semi-static signaling, the time domain unit may be referred to as a semi-static time domain unit. For example, when it is determined based on the first semi-static signaling that the transmission direction of a slot is uplink, the slot may be referred to as a semi-static uplink slot (semi-static UL slot). When it is determined based on the first semi-static signaling that the transmission direction of a symbol is uplink, the symbol may be referred to as a semi-static uplink symbol (semi-static UL symbol).

In an embodiment, the first semi-static signaling includes at least one of:
a broadcast signaling; or
a Radio Resource Control (RRC) signaling.

In an embodiment, the broadcast signaling includes, but is not limited to, a System Information Block (SIB) or Other System Information (OSI). For example, the SIB may include SIB1.

In an embodiment, the RRC signaling may include a user equipment dedicated radio resource control signaling (UE-dedicated RRC signaling). Certainly, in addition to using the RRC signaling as the first semi-static signaling, other unicast signaling may also be used as the first semi-static signaling.

Taking a case where the network device configures the time division duplexing structure for the terminal through the UE-dedicated RRC signaling as an example, the UE-dedicated RRC signaling may carry a user equipment-dedicated time division duplexing uplink and downlink configuration (UE-dedicated TDD UL-DL configuration), and the UE-dedicated TDD UL-DL configuration may represent the time division duplexing structure.

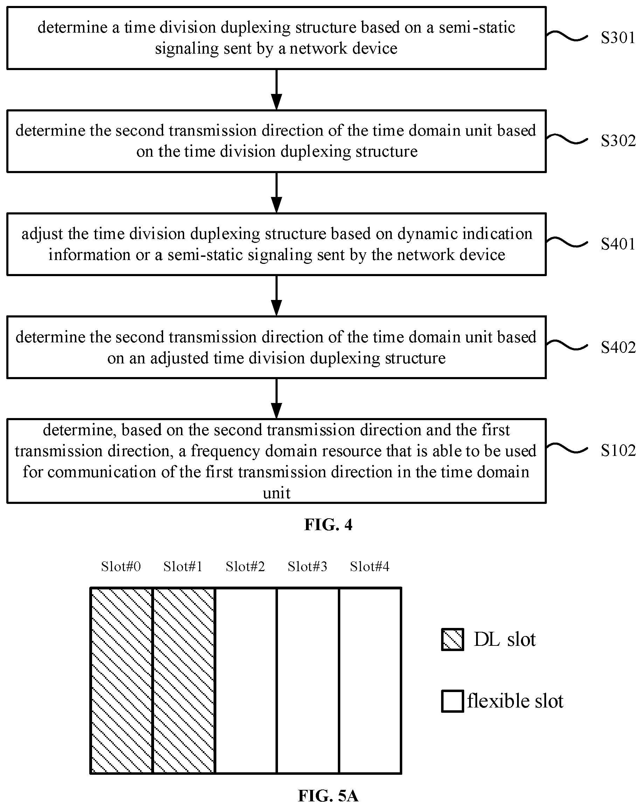

FIG. 4 is a schematic flowchart illustrating another method for determining a resource according to an embodiment of the disclosure. As illustrated in FIG. 4, determining the second transmission direction of the time domain unit further includes the following.

At block S401, the time division duplexing structure is adjusted based on dynamic indication information or a second semi-static signaling sent by the network device.

At block S402, the second transmission direction of the time domain unit is determined based on an adjusted time division duplexing structure.

In an embodiment, the time division duplexing structure configured by the network device for the terminal through the first semi-static signaling may be adjusted. For example, after the network device configures a first time division duplexing structure for the terminal through the first semi-static configuration, the first time division duplexing structure may be adjusted through the second semi-static signaling sent to the terminal or through the dynamic indication information sent to the terminal.

The second semi-static signaling may be, for example, a broadcast signaling or an RRC signaling. The second semi-static signaling may be the same type as or different from the first semi-static signaling, which may be specifically configured as required. The dynamic indication information includes at least one information field of Downlink Control Information (DCI), such as a Slot Frame Indicator (SFI) information field.

The terminal may adjust the configured time division duplexing structure based on the dynamic indication information sent by the network device or adjust the configured time division duplexing structure based on the semi-static signaling sent by the network device. Then, the terminal may determine the second transmission direction of the time domain unit based on the adjusted time division duplexing structure.

It is noteworthy that adjusting the time division duplexing structure may change the transmission direction of the time domain unit, for example, changing the transmission direction of the flexible time domain unit, while not changing the transmission directions of the uplink time domain unit and the downlink time domain unit.

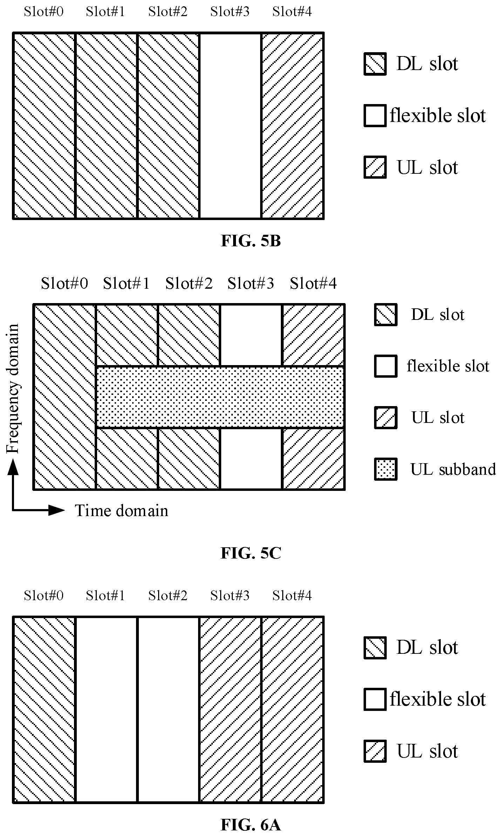

FIG. 5A is a schematic diagram illustrating a slot according to an embodiment of the disclosure. FIG. 5B is a schematic diagram illustrating another slot according to an embodiment of the disclosure. FIG. 5C is a schematic diagram illustrating a subband according to an embodiment of the disclosure.

In an example, as illustrated in FIG. 5A, the network device sends the UE-dedicated RRC signaling to the terminal. The UE-dedicated RRC signaling carries the UE-dedicated TDD UL-DL configuration. Here, taking a periodicity including 5 slots as an example, the terminal determines, based on the UE-dedicated TDD UL-DL configuration, that the TDD structure is DDFFF, where "D" is used to represent a DL slot and "F" is used to represent a flexible slot. That is, in one periodicity, slot#0 to slot#1 are DL slots, and slot#2 to slot#4 are flexible slots.

As illustrated in FIG. 5B, the network device sends DCI format 2_0 to the terminal. A new TDD structure is indicated as DDDFU through an SFI in the DCI format 2_0. The terminal may determine, based on the SFI in DCI format 2_0, that the TDD structure has been adjusted from DDDFU to DDDFU, where "U" is used to represent a UL slot.

In some examples, the network device sends the UE-dedicated RRC signaling again to the terminal and configures the TDD structure as DDDFU through the UE-dedicated TDD UL-DL configuration carried by the re-sent UE-dedicated RRC signaling. The terminal may determine that the TDD structure is DDDFU based on the UE-dedicated RRC signaling sent again by the network device and further determine that the TDD structure has been adjusted from DDDFU to DDDFU.

Compared with the TDD structure, i.e., DDDFU, before adjustment, it may be determined, based on the adjusted TDD structure, i.e., DDDFU, that slot#0, slot#1, and slot#3 remain unchanged, the transmission direction of slot#2 is adjusted from flexible to DL, and the transmission direction of slot#4 is adjusted from flexible to UL.

As illustrated in FIG. 5C, the network device configures an uplink subband (UL subband) for the terminal. That is, the first transmission direction is UL. The terminal may determine that the uplink subband is located in slot#1 to slot#4 and may also determine a respective transmission direction (i.e., respective second transmission direction) of each time domain unit where the uplink subband is located. For example, the transmission directions slot#1 to slot#2 are DL, the transmission direction of slot#3 is flexible, and the transmission direction of slot#4 is UL.

The terminal may determine that the first transmission direction being UL is the same as the second transmission direction being UL in slot#4. Thus, the frequency domain resource(s) that is/are able to be used for the uplink communication in slot#4 include(s) all frequency domain resources configured for slot#4, such that, in slot#4, the terminal may transmit uplink data to the network device within the uplink subband and may also transmit the uplink data to the network device on the frequency domain resources, configured for slot#4, other than the uplink subband.

In slot#1 and slot#2, the first transmission direction being UL is different from the second transmission direction being DL. In slot#3, the first transmission direction being UL is different from the second transmission direction being flexible. Therefore, the frequency domain resource(s) that is/are able to be used for the uplink communication in slot#1 to slot#3 is/are the uplink subband. That is, in slot#1 to slot#3, the terminal may transmit uplink data to the network device only within the uplink subband and cannot use any frequency domain resource outside the uplink subband to transmit the uplink data to the network device.

Accordingly, when the second transmission direction of the time domain unit where the subband of the first transmission direction is located is the same as the first transmission direction, the terminal may use all the frequency domain resources configured for the time domain unit to perform the communication of the first transmission direction. For example, in embodiments illustrated in FIG. 5C, in performing the uplink communication in slot#4, all the frequency domain resources configured for slot#4 may be used for the uplink communication, and the uplink communication is not limited to being performed on the frequency domain resource(s) corresponding to the uplink subband. Accordingly, the frequency domain resources corresponding to slot#4 may be fully utilized, which is conducive to improving scheduling flexibility and communication efficiency.

The above embodiments mainly illustrate the technical solution of the disclosure by way of example when the first transmission direction is uplink. The following embodiments illustrate the technical solution of the disclosure by way of example when the first transmission direction is downlink.

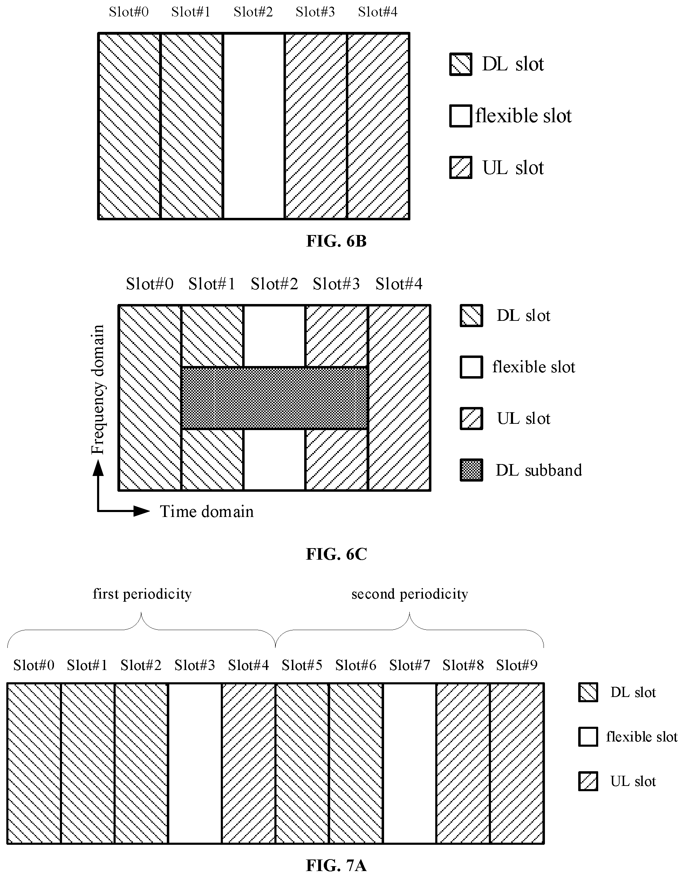

FIG. 6A is a schematic diagram illustrating a slot according to an embodiment of the disclosure. FIG. 6B is a schematic diagram illustrating another slot according to an embodiment of the disclosure. FIG. 6C is a schematic diagram illustrating a subband according to an embodiment of the disclosure.

As illustrated in FIG. 6A, the network device sends a UE-dedicated RRC signaling carrying a UE-dedicated TDD UL-DL configuration to the terminal. Taking a periodicity including 5 slots as an example, the terminal determines that the TDD structure is DFFUU based on the UE-dedicated TDD UL-DL configuration. That is, slot#0 is a DL slot, slot#1 to slot#2 are flexible slots, and slot#3 to slot#4 are UL slots.

As illustrated in FIG. 6B, the network device sends DCI format 2_0 to the terminal. A new TDD structure is indicated as DDFUU through the SFI in the DCI format 2_0. The terminal may determine, based on the SFI in the DCI format 2_0, that the TDD structure has been adjusted from DFFUU to DDFUU.

In some examples, the network device sends the UE-dedicated RRC signaling again to the terminal and configures the TDD structure to DDFUU through the UE-dedicated TDD UL-DL configuration carried by the re-sent UE-dedicated RRC signaling. The terminal may determine that the TDD structure is DDFUU based on the UE-dedicated RRC signaling sent again by the network device, and further determine that the TDD structure has been adjusted from DFFUU to DDFUU.

Compared with the TDD structure, i.e., DFFUU, before adjustment, it may be determined, based on the adjusted TDD structure, i.e., DDFUU, that slot#0, slot#2 to slot#4 remain unchanged, and the transmission direction of slot#1 has been adjusted from flexible to DL.

As illustrated in FIG. 6C, the network device configures a downlink subband (DL subband) for the terminal. That is, the first transmission direction is DL. The terminal may determine that the downlink subband is located in slot#1 to slot#3 and may also determine a respective transmission direction (i.e., a respective second transmission direction) of each time domain unit where the downlink subband is located. The transmission direction of slot#1 is DL, the transmission direction of slot#2 is flexible, and the transmission direction of slot#3 is UL.

The terminal may determine that the first transmission direction being DL is the same as the second transmission direction being DL in slot#1. Thus, the frequency domain resource(s) that is/are able be used for the downlink communication in slot#1 include(s) all frequency domain resources configured for slot#1, such that in slot#1, the terminal may receive downlink data transmitted by the network device within the downlink subband and may also receive the downlink data transmitted by the network device on frequency domain resources, configured for slot#1, other than the downlink subband.

In slot#2, the first transmission direction being DL is different from the second transmission direction being flexible. In slot#3, the first transmission direction being DL is different from the second transmission direction being UL. Thus, the frequency domain resource(s) that is/are able to be used for the downlink communication in slot#2 to slot#3 is/are the downlink subband. That is, in slot#2 to slot#3, the terminal may receive the downlink data transmitted by the network device only within the downlink subband and cannot use frequency domain resource(s) outside the downlink subband to receive the downlink data transmitted by the network device.

Accordingly, when the second transmission direction of the time domain unit where the subband of the first transmission direction is located is the same as the first transmission direction, all frequency domain resources configured for the time domain unit may be used for the communication of the first transmission direction. For example, in embodiments illustrated in FIG. 6C, in performing the downlink communication in slot#1, all frequency domain resources configured for slot#1 may be used for the downlink communication, and the downlink communication is not limited to being performed on the frequency domain resource(s) corresponding to the downlink subband. Accordingly, the frequency domain resources corresponding to slot#1 may be fully utilized, which is conducive to improving scheduling flexibility and communication efficiency.

The technical solutions of the disclosure will be further illustrated by means of several embodiments below.

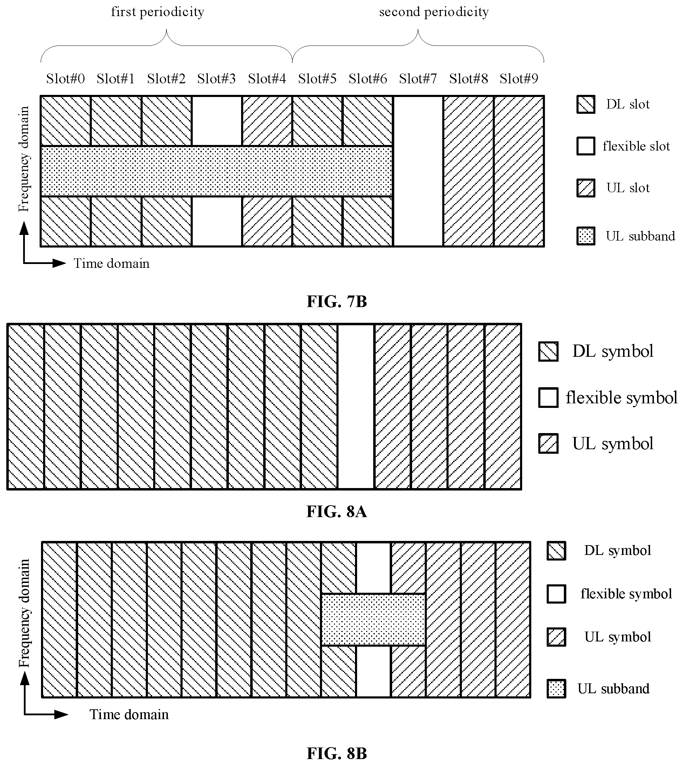

FIG. 7A is a schematic diagram illustrating a slot according to an embodiment of the disclosure. FIG. 7B is a schematic diagram illustrating a subband according to an embodiment of the disclosure.

As illustrated in FIG. 7A, the network device configures a dual-periodicity time division duplexing (TDD) structure for the terminal. Each periodicity includes 5 slots.

The 5 slots in a first periodicity are slot#0 to slot#4. The 5 slots in a second periodicity are slot#5 to slot9. The TDD structure of the first periodicity is DDDFU. That is, slot#0 to slot#2 are DL slots, slot#3 is a flexible slot, and slot#4 is a UL slot. The TDD structure of the second periodicity is DDFUU. That is, slot#5 to slot#6 are DL slots, slot#7 is a flexible slot, and slot#8 to slot#9 are UL slots.

As illustrated in FIG. 7B, the network device configures an uplink subband (UL subband) for the terminal. That is, the first transmission direction is uplink. The terminal may determine that the uplink subband is located in slot#0 to slot#6 and may also determine a respective transmission direction (i.e., a respective second transmission direction) of each time domain unit where the uplink subband is located. The transmission directions of slot#0 to slot#2 and slot#5 to slot#6 are DL, the transmission direction of slot#3 is flexible, and the transmission direction of slot#4 is UL.

The terminal may determine that the first transmission direction being UL is the same as the second transmission direction being UL in slot#4. Thus, the frequency domain resource(s) that is/are able to be used for the uplink communication in slot#4 include(s) all frequency domain resources configured for slot#4, such that in slot#4, the terminal may transmit uplink data to the network device within the uplink subband and may also transmit the uplink data to the network device on the frequency domain resource(s), configured for slot#4, other than the uplink subband.

In slot#0 to slot#2 and slot#5 to slot#6, the first transmission direction being UL is different from the second transmission direction being DL. In slot#3, the first transmission direction being UL is different from the second transmission direction being flexible. Thus, the frequency domain resource(s) that is/are able to be used for the uplink communication in slot#0 to slot#3 and slot#5 to slot#6 is/are the uplink subband. That is, in slot#0 to slot#3 and slot#5 to slot#6, the terminal may transmit the uplink data to the network device only within the uplink subband and cannot use the frequency domain resource(s) outside the uplink subband to transmit uplink data to the network device.

Accordingly, when the second transmission direction of the time domain unit where the subband of the first transmission direction is located is the same as the first transmission direction, all frequency domain resources configured for the time domain unit may be used for the communication of the first transmission direction. For example, in embodiments illustrated in FIG. 7B, in performing the uplink communication in slot#4, all frequency domain resources configured for slot#4 may be used for the uplink communication, and the uplink communication is not limited to being performed on the frequency domain resource(s) corresponding to the uplink subband. Accordingly, the frequency domain resources corresponding to slot#4 may be fully utilized, which is conducive to improving scheduling flexibility and communication efficiency.

The above embodiments mainly illustrate technical solutions of the disclosure in the case where the time domain unit is a slot. The following embodiments illustrate the technical solutions of the disclosure in the case where the time domain unit is a symbol.

FIG. 8A is a schematic diagram illustrating a symbol according to an embodiment of the disclosure. FIG. 8B is a schematic diagram illustrating a subband according to an embodiment of the disclosure.

As illustrated in FIG. 8A, a slot may include 14 symbols. For example, the structure of symbols in the slot configured by the network device for the terminal is DDDDDDDDDFUUUU. That is, the 1st to 9th symbols are DL symbols, the 10th symbol is a flexible symbol, and the 11th to 14th symbols are UL symbols.

As illustrated in FIG. 8B, the network device configures an uplink subband (UL subband) for the terminal. That is, the first transmission direction is uplink. The terminal may determine that the uplink subband is located in the 9th symbol to the 11th symbol and may also determine a respective transmission direction (i.e., a respective second transmission direction) of each time domain unit where the uplink subband is located. The transmission direction of the 9th symbol is DL, the transmission direction of the 10th symbol is flexible, and the transmission direction of the 11th symbol is UL.

The terminal may determine that the first transmission direction being UL is the same as the second transmission direction being UL in the 11th symbol. Thus, the frequency domain resource(s) that is/are able to be used for the uplink communication in the 11th symbol include(s) all frequency domain resources configured for the 11th symbol, such that in the 11th symbol, the terminal may transmit uplink data to the network device within the uplink subband and may also transmit the uplink data to the network device on the frequency domain resource(s), configured for slot#4, other than the uplink subband.

In the 9th symbol, the first transmission direction being UL is different from the second transmission direction being DL. In the 10th symbol, the first transmission direction being UL is different from the second transmission direction being flexible. Thus, the frequency domain resource(s) that is/are able to be used for the uplink communication in the 10th and 11th symbols is/are the uplink subband. That is, in the 10th and 11th symbols, the terminal may transmit the uplink data to the network device only within the uplink subband and cannot use the frequency domain resource(s) outside the uplink subband to transmit the uplink data to the network device.

Accordingly, when the second transmission direction of the time domain unit where the subband of the first transmission direction is located is the same as the first transmission direction, all frequency domain resources configured for the time domain unit may be used for the communication of the first transmission direction. For example, in embodiments illustrated in FIG. 8B, in performing the uplink communication in the 11th symbol, all frequency domain resources configured for the 11th symbol may be used for the uplink communication, and the uplink communication is not limited to being performed on the frequency domain resource(s) corresponding to the uplink subband. Accordingly, the frequency domain resources corresponding to the 11th symbol may be fully utilized, which is conducive to improving scheduling flexibility and communication efficiency.

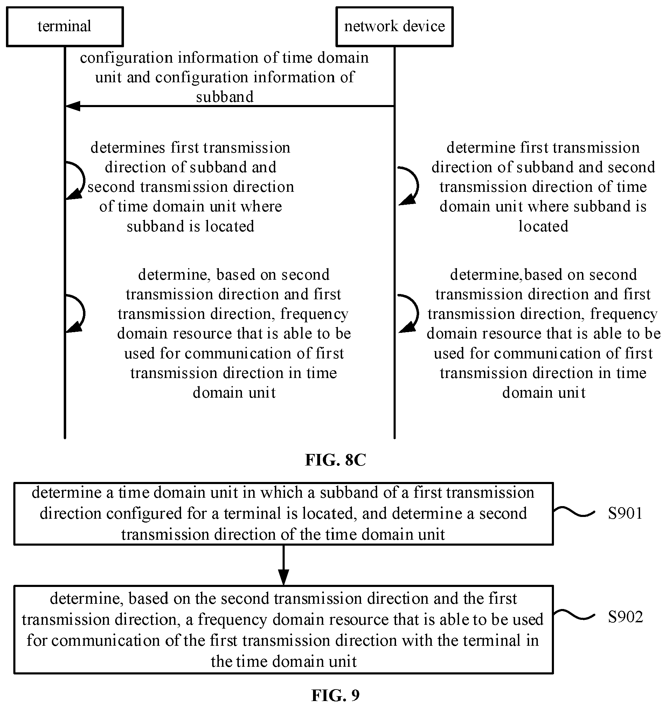

FIG. 9 is a schematic flowchart illustrating a method for determining a resource according to an embodiment of the disclosure. The method illustrated in this embodiment may be performed by a network device. The network device may communicate with a terminal. The network device includes, but is not limited to, a base station in a communication system, such as a 4G base station, a 5G base station, or a 6G base station. The terminal includes, but is not limited to, a mobile phone, a tablet computer, a wearable device, a sensor, an Internet of Things device, or other communication devices.

As illustrated in FIG. 9, the method for determining a resource may include the following.

At block S901, a time domain unit in which a subband of a first transmission direction configured for a terminal is located is determined, and a second transmission direction of the time domain unit is determined.

At block S902, frequency domain resource(s) that is/are able to be used for communication of the first transmission direction with the terminal in the time domain unit is/are determined based on the second transmission direction and the first transmission direction.

In an embodiment, the first transmission direction may include at least one of: a transmission direction of an uplink (UL) time domain resource, for example, referred to as uplink; or a transmission direction of a downlink (UL) time domain resource, for example, referred to as downlink.

In an embodiment, the second transmission direction may include at least one of: a transmission direction of an uplink (UL) time domain resources, for example, referred to as uplink; a transmission direction of a downlink (UL) time domain resource, for example, referred to as downlink; or a transmission direction of a flexible time domain resource, for example, referred to as flexible.

In an embodiment, the time domain unit includes at least one of: a slot or a symbol. The symbol may be an OFDM symbol.

The slot may be a slot for full-duplex communication, which may also be referred to as SBFD slot. In a case that the network device is able to perform the full-duplex communication and the terminal is able to perform the half-duplex communication, in the slot for the full-duplex communication, the network device can simultaneously receive and send data and the terminal can send or receive data. In a case that the network device is able to perform the full-duplex communication and the terminal is able to perform the full-duplex communication, in the slot for full-duplex communication, the network device can simultaneously receive and send data and the terminal can simultaneously receive and send data.

The symbol may be a symbol in a slot for full-duplex communication. In a case that the network device is able to perform the full-duplex communication and the terminal is able to perform the half-duplex communication, in the symbol for full-duplex communication, the network device can simultaneously receive and send data and the terminal can send or receive data. In a case that the network device is able to perform the full-duplex communication and the terminal is able to perform the full-duplex communication, in the symbol for full-duplex communication, the network device can simultaneously receive and send data and the terminal can simultaneously receive and send data.

According to embodiments of the disclosure, after the network device configures a subband of the first transmission direction for the terminal, the time domain unit where the subband of the first transmission direction is located may be determined and the second transmission direction of the time domain unit where the subband is located may be determined. Further, the frequency domain resource(s) that is/are able to be used for the communication of the first transmission direction in the time domain unit may be determined based on the second transmission direction and the first transmission direction. In other words, the terminal may determine, based on the second transmission direction and the first transmission direction, whether to perform the communication of the first transmission direction within the subband of the time domain unit or to perform the communication of the first transmission direction on all frequency domain resources corresponding to the time domain unit. Therefore, the communication of the first transmission direction is not limited to being performed within the subband of the first transmission direction in the disclosure. Accordingly, the frequency domain resources corresponding to the time domain unit where the subband of the first transmission direction is located may be fully utilized, which is conducive to improving scheduling flexibility and communication efficiency.

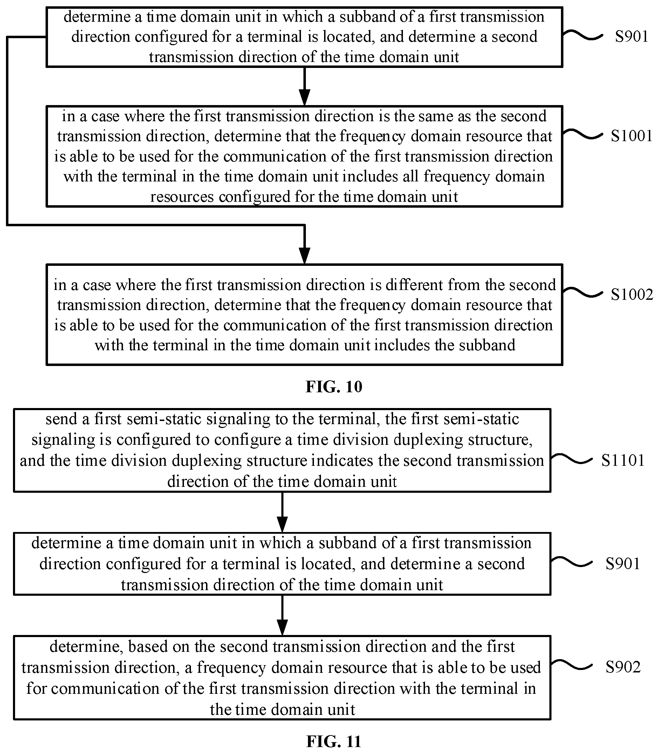

FIG. 10 is a schematic flowchart illustrating another method for determining a resource according to an embodiment of the disclosure. As illustrated in FIG. 10, determining, based on the second transmission direction of the time domain unit and the first transmission direction, the frequency domain resource(s) that is/are able to be used for communication of the first transmission direction with the terminal in the time domain unit includes a block S1001 and/or a block S1002.

At block S1001, in a case where the first transmission direction is the same as the second transmission direction, it is determined that the frequency domain resource(s) that is/are able to be used for the communication of the first transmission direction with the terminal in the time domain unit include(s) all frequency domain resources configured for the time domain unit.

At block S1002, in a case where the first transmission direction is different from the second transmission direction, it is determined that the frequency domain resource(s) that is/are able to be used for the communication of the first transmission direction with the terminal in the time domain unit include(s) the sub-band.

In an embodiment, when the first transmission direction is the same as the second transmission direction, the network device may determine that the frequency domain resource(s) that is/are able to be used for the communication of the first transmission direction with the terminal in the time domain unit include(s) all the frequency domain resources configured for the time domain unit. That is, the network device may schedule the terminal for the communication of the first transmission direction on all the frequency domain resources configured for the time domain unit, such that the communication of the first transmission direction with the terminal may be performed on all the frequency domain resources configured for the time domain unit, and the communication of the first transmission direction with the terminal is not limited to being performed within the subband of the first transmission direction. Accordingly, the frequency domain resources corresponding to the time domain unit where the subband of the first transmission direction is located are fully utilized, which is conducive to improving scheduling flexibility and communication efficiency.

When the first transmission direction is different from the second transmission direction, the network device determines that the frequency domain resource(s) that is/are able to be used for the communication of the first transmission direction in the time domain unit include(s) the subband. In an example, when the first transmission direction is different from the second transmission direction, the terminal determines that the frequency domain resource(s) that is/are able to be used for the communication of the first transmission direction in the time domain unit is/are the subband of the first transmission direction. That is, the network device may perform the communication of the first transmission direction with the terminal only within the subband of the first transmission direction. This case may meet the requirement that the terminal performs the communication of the first transmission direction within the subband of the first transmission direction.

In an embodiment, the time domain unit includes at least one of:
a slot for full-duplex communication; or
a symbol in a slot for full-duplex communication.

In an embodiment, the first transmission direction being different from the second transmission direction includes at least one of:
the first transmission direction being downlink and the second transmission direction being uplink;
the first transmission direction being downlink and the second transmission direction being flexible;
the first transmission direction being uplink, and the second transmission direction being downlink; or
the first transmission direction being uplink and the second transmission direction being flexible.

When the second transmission direction of the time domain unit is uplink, the terminal may be scheduled within the time domain unit for uplink communication. When the second transmission direction of the time domain unit is downlink, the terminal may be scheduled within the time domain unit for downlink communication. When the transmission direction of the time domain unit is flexible, the terminal may be scheduled within the time domain unit for uplink communication or the terminal may be scheduled within the time domain unit for downlink communication.

FIG. 11 is a schematic flowchart illustrating another method for determining a resource according to an embodiment of the disclosure. As illustrated in FIG. 11, the method further includes the following.

At block S1101, a first semi-static signaling is sent to the terminal. The first semi-static signaling is configured to configure a time division duplexing structure. The time division duplexing structure indicates the second transmission direction of the time domain unit.

In an embodiment, the network device may configure the time division duplexing structure for the terminal through the first semi-static signaling. The time division duplexing structure indicating the transmission direction(s) of one or more time domain units configured for the terminal. Therefore, the terminal may determine the transmission direction of the time domain unit based on the time division duplexing structure.

When the transmission direction of the time domain unit is determined based on the first semi-static signaling, the time domain unit may be referred to as a semi-static time domain unit. For example, when it is determined based on the first semi-static signaling that the transmission direction of a slot is uplink, the slot may be referred to as a semi-static uplink slot (semi-static UL slot). When it is determined based on the first semi-static signaling that the transmission direction of a symbol is uplink, the symbol may be referred to as a semi-static uplink symbol (semi-static UL symbol).

In an embodiment, the first semi-static signaling includes at least one of:
a broadcast signaling; or
a Radio Resource Control (RRC) signaling.

In an embodiment, the broadcast signaling includes, but is not limited to, SIB or OSI. For example, SIB may include SIB 1.

In an embodiment, the RRC signaling may include a UE-dedicated RRC signaling. Certainly, in addition to using the RRC signaling as the first semi-static signaling, other unicast signaling may also be used as the first semi-static signaling.

Taking a case where the network device configures the time division duplexing structure for the terminal through the UE-dedicated RRC signaling as an example, the UE-dedicated RRC signaling may carry a UE-dedicated TDD UL-DL configuration, and the UE-dedicated TDD UL-DL configuration may represent the time division duplexing structure.

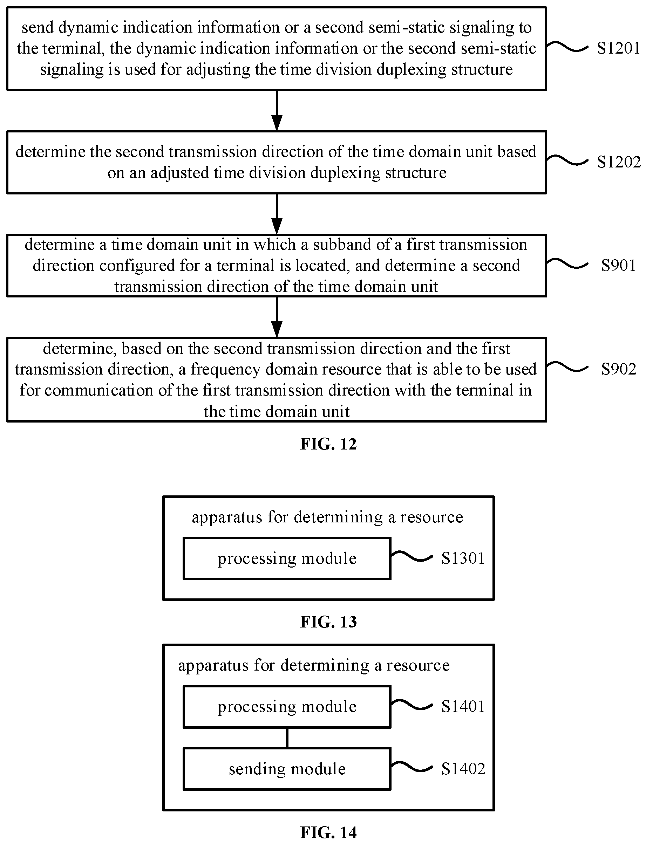

FIG. 12 is a schematic flowchart illustrating another method for determining a resource according to an embodiment of the disclosure. As illustrated in FIG. 12, the method further includes the following.

At block S1201, dynamic indication information or a second semi-static signaling is sent to the terminal. The dynamic indication information or the second semi-static signaling is used for adjusting the time division duplexing structure.

At block S1202, the second transmission direction of the time domain unit is determined based on an adjusted time division duplexing structure.

In an embodiment, the time division duplexing structure configured by the network device for the terminal through the first semi-static signaling may be adjusted. For example, after the network device configures a first time division duplexing structure for the terminal through the first semi-static configuration, the time division duplexing structure may be adjusted through the second semi-static signaling sent to the terminal or through the dynamic indication information sent to the terminal.

The second semi-static signaling may be, for example, a broadcast signaling or an RRC signaling. The second semi-static signaling be the same or different from the first semi-static signaling, which may be specifically configured as required. The dynamic indication information includes at least one information field of the DCI, such as an SFI information field.

The terminal may adjust the configured time division duplexing structure based on the dynamic indication information sent by the network device or adjust the configured time division duplexing structure based on the semi-static signaling sent by the network device. Then, the terminal may determine the second transmission direction of the time domain unit based on the adjusted time division duplexing structure.

It is noteworthy that adjusting the time division duplexing structure may change the transmission direction of the time domain unit, for example, changing the transmission direction of the flexible time domain unit, while not changing the transmission directions of the uplink time domain unit and the downlink time domain unit.

In an example, as illustrated in FIG. 5A, the network device sends the UE-dedicated RRC signaling to the terminal. The UE-dedicated RRC signaling carries the UE-dedicated TDD UL-DL configuration. Here, taking a periodicity including 5 slots as an example, the network device determines, based on the UE-dedicated TDD UL-DL configuration sent to the terminal, that the TDD structure is DDFFF, where "D" is used to represent a DL slot and "F" is used to represent a flexible slot. That is, in one periodicity, slot#0 to slot#1 are DL slots, and slot#2 to slot#4 are flexible slots.

As illustrated in FIG. 5B, the network device sends DCI format 2_0 to the terminal. A new TDD structure is indicated as DDDFU through an SFI in the DCI format 2_0. The network device may determine, based on the SFI in DCI format 2_0 sent to the terminal, that the TDD structure has been adjusted from DDDFU to DDDFU, where "U" is used to represent a UL slot.

In some examples, the network device sends the UE-dedicated RRC signaling again to the terminal and configures the TDD structure as DDDFU through the UE-dedicated TDD UL-DL configuration carried by the re-sent UE-dedicated RRC signaling. The network device may determine that the TDD structure is DDDFU based on the re-sent UE-dedicated RRC signaling and further determine that the TDD structure has been adjusted from DDDFU to DDDFU.

Compared with the TDD structure, i.e., DDDFU , before adjustment, it may be determined, based on the adjusted TDD structure, i.e., DDDFU, that slot#0, slot#1, and slot#3 remain unchanged, the transmission direction of slot#2 is adjusted from flexible to DL, and the transmission direction of slot#4 is adjusted from flexible to UL.

As illustrated in FIG. 5C, the network device configures a UL subband for the terminal. That is, the first transmission direction is UL. The terminal may determine that the uplink subband is located in slot#1 to slot#4 and may also determine a respective transmission direction (i.e., respective second transmission direction) of each time domain unit where the uplink subband is located. For example, the transmission directions of slot#1 to slot#2 are DL, the transmission direction of slot#3 is flexible, and the transmission direction of slot#4 is UL.

The network device may determine that the first transmission direction being UL is the same as the second transmission direction being UL in slot#4. Thus, the frequency domain resource(s) that is/are able to be used for the uplink communication with the terminal in slot#4 include(s) all frequency domain resources configured for slot#4, such that in slot#4, the network device may receive uplink data sent by the terminal within the uplink subband and may also receive the uplink data sent by the terminal on the frequency domain resources, configured for slot#4, other than the uplink subband.

In slot#1 and slot#2, the first transmission direction being UL is different from the second transmission direction being DL. In slot#3, the first transmission direction being UL is different from the second transmission direction being flexible. Therefore, the frequency domain resource(s) that is/are able to be used for the uplink communication in slot#1 to slot#3 is/are the uplink subband. That is, in slot#1 to slot#3, the network device may receive uplink data sent by the terminal only within the uplink subband and cannot use any frequency domain resource outside the uplink subband to receive the uplink data sent by the terminal.

Accordingly, when the second transmission direction of the time domain unit where the subband of the first transmission direction is located is the same as the first transmission direction, the network device may use all the frequency domain resources configured for the time domain unit to perform the communication of the first transmission direction with the terminal. For example, in embodiments illustrated in FIG. 5C, in performing the uplink communication in slot#4, all the frequency domain resources configured for slot#4 may be used for the uplink communication with the terminal. That is, the network device may schedule the terminal on all frequency domain resources configured for slot#4 to perform the uplink transmission, and the uplink communication is not limited to being performed with the terminal on the frequency domain resource(s) corresponding to the uplink subband. Accordingly, the frequency domain resources corresponding to slot#4 may be fully utilized, which is conducive to improving scheduling flexibility and communication efficiency.

The above embodiments mainly illustrate the technical solution of the disclosure by way of example when the first transmission direction is uplink. The following embodiments illustrate the technical solution of the disclosure by way of example when the first transmission direction is downlink.

As illustrated in FIG. 6A, the network device sends a UE-dedicated RRC signaling carrying a UE-dedicated TDD UL-DL configuration to the terminal. Taking a periodicity including 5 slots as an example, the network device determines that the TDD structure is DFFUU based on the UE-dedicated TDD UL-DL configuration. That is, slot#0 is a DL slot, slot#1 to slot#2 are flexible slots, and slot#3 to slot#4 are UL slots.

As illustrated in FIG. 6B, the network device sends DCI format 2_0 to the terminal. A new TDD structure is indicated as DDFUU through the SFI in the DCI format 2_0. The network device may determine, based on the SFI in the DCI format 2_0, that the TDD structure has been adjusted from DFFUU to DDFUU.

In some examples, the network device sends the UE-dedicated RRC signaling again to the terminal and configures the TDD structure to DDFUU through the UE-dedicated TDD UL-DL configuration carried by the re-sent UE-dedicated RRC signaling. The network device may determine that the TDD structure is DDFUU based on the re-sent UE-dedicated RRC signaling, and further determine that the TDD structure has been adjusted from DFFUU to DDFUU.

Compared with the TDD structure, i.e., DFFUU, before adjustment, it may be determined, based on the adjusted TDD structure, i.e., DDFUU, that slot#0, slot#2 to slot#4 remain unchanged, and the transmission direction of slot#1 has been adjusted from flexible to DL.

As illustrated in FIG. 6C, the network device configures a DL subband for the terminal. That is, the first transmission direction is DL. The network device may determine that the downlink subband is located in slot#1 to slot#3 and may also determine a respective transmission direction (i.e., a respective second transmission direction) of each time domain unit where the downlink subband is located. The transmission direction of slot#1 is DL, the transmission direction of slot#2 is flexible, and the transmission direction of slot#3 is UL.

The network device may determine that the first transmission direction being DL is the same as the second transmission direction being DL in slot#1. Thus, the frequency domain resource(s) that is/are able be used for the downlink communication in slot#1 include(s) all frequency domain resources configured for slot#1, such that in slot#1, the network device may sent downlink data to the terminal within the downlink subband and may also send the downlink data to the terminal on frequency domain resources, configured for slot#1, other than the downlink subband.

In slot#2, the first transmission direction being DL is different from the second transmission direction being flexible. In slot#3, the first transmission direction being DL is different from the second transmission direction being UL. Thus, the frequency domain resource(s) that is/are able to be used for the downlink communication in slot#2 to slot#3 is/are the downlink subband. That is, in slot#2 to slot#3, the network device may send the downlink data to the terminal only within the downlink subband and cannot use frequency domain resource(s) outside the downlink subband to send the downlink data to the terminal.

Accordingly, when the second transmission direction of the time domain unit where the subband of the first transmission direction is located is the same as the first transmission direction, all frequency domain resources configured for the time domain unit may be used for the communication of the first transmission direction. For example, in embodiments illustrated in FIG. 6C, in performing the downlink communication in slot#1, all frequency domain resources configured for slot#1 may be used by the network device for the downlink communication with the terminal. That is, the network device may schedule the terminal on all the frequency domain resources configured for slot#1 for the downlink reception, and the downlink communication is not limited to being performed on the frequency domain resource(s) corresponding to the downlink subband. Accordingly, the frequency domain resources corresponding to slot#1 may be fully utilized, which is conducive to improving scheduling flexibility and communication efficiency.

The technical solutions of the disclosure will be further illustrated by means of several embodiments below.

FIG. 7A is a schematic diagram illustrating a slot according to an embodiment of the disclosure. FIG. 7B is a schematic diagram illustrating a subband according to an embodiment of the disclosure.

As illustrated in FIG. 7A, the network device configures a dual-periodicity time division duplexing (TDD) structure for the terminal. Each periodicity includes 5 slots.

The 5 slots in a first periodicity are slot#0 to slot#4. The 5 slots in a second periodicity are slot#5 to slot9. The TDD structure of the first periodicity is DDDFU. That is, slot#0 to slot#2 are DL slots, slot#3 is a flexible slot, and slot#4 is a UL slot. The TDD structure of the second periodicity is DDFUU. That is, slot#5 to slot#6 are DL slots, slot#7 is a flexible slot, and slot#8 to slot#9 are UL slots.

As illustrated in FIG. 7B, the network device configures an uplink subband (UL subband) for the terminal. That is, the first transmission direction is uplink. The network device may determine that the uplink subband is located in slot#0 to slot#6 and may also determine a respective transmission direction (i.e., a respective second transmission direction) of each time domain unit where the uplink subband is located. The transmission directions of slot#0 to slot#2 and slot#5 to slot#6 are DL, the transmission direction of slot#3 is flexible, and the transmission direction of slot#4 is UL.

The network device may determine that the first transmission direction being UL is the same as the second transmission direction being UL in slot#4. Thus, the frequency domain resource(s) that is/are able to be used for the uplink communication in slot#4 include(s) all frequency domain resources configured for slot#4, such that in slot#4, the network device may receive uplink data sent by the terminal within the uplink subband and may also receive the uplink data sent by the terminal on the frequency domain resource(s), configured for slot#4, other than the uplink subband.

In slot#0 to slot#2 and slot#5 to slot#6, the first transmission direction being UL is different from the second transmission direction being DL. In slot#3, the first transmission direction being UL is different from the second transmission direction being flexible. Thus, the frequency domain resource(s) that is/are able to be used for the uplink communication in slot#0 to slot#3 and slot#5 to slot#6 is/are the uplink subband. That is, in slot#0 to slot#3 and slot#5 to slot#6, the network device may receive the uplink data sent by the terminal only within the uplink subband and cannot use the frequency domain resource(s) outside the uplink subband to receive the uplink data sent by the terminal.

Accordingly, when the second transmission direction of the time domain unit where the subband of the first transmission direction is located is the same as the first transmission direction, the network device may use all frequency domain resources configured for the time domain unit for the communication of the first transmission direction. For example, in embodiments illustrated in FIG. 7B, in performing the uplink communication in slot#4, all frequency domain resources configured for slot#4 may be used for the uplink communication. That is, the network device may schedule the terminal on all the frequency domain resources configured for slot#4 for the uplink transmission and the uplink communication is not limited to being performed on the frequency domain resource(s) corresponding to the uplink subband. Accordingly, the frequency domain resources corresponding to slot#4 may be fully utilized, which is conducive to improving scheduling flexibility and communication efficiency.

The above embodiments mainly illustrate technical solutions of the disclosure in the case where the time domain unit is a slot. The following embodiments illustrate the technical solutions of the disclosure in the case where the time domain unit is a symbol.

As illustrated in FIG. 8A, a slot may include 14 symbols. For example, the structure of symbols in the slot configured by the network device for the terminal is DDDDDDDDDFUUUU. That is, the 1st to 9th symbols are DL symbols, the 10th symbol is a flexible symbol, and the 11th to 14th symbols are UL symbols.

As illustrated in FIG. 8B, the network device configures a UL subband for the terminal. That is, the first transmission direction is uplink. The network device may determine that the uplink subband is located in the 9th symbol to the 11th symbol and may also determine a respective transmission direction (i.e., a respective second transmission direction) of each time domain unit where the uplink subband is located. The transmission direction of the 9th symbol is DL, the transmission direction of the 10th symbol is flexible, and the transmission direction of the 11th symbol is UL.

The network device may determine that the first transmission direction being UL is the same as the second transmission direction being UL in the 11th symbol. Thus, the frequency domain resource(s) that is/are able to be used for the uplink communication in the 11th symbol include(s) all frequency domain resources configured for the 11th symbol, such that, in the 11th symbol, the network device may receive uplink data sent by the terminal within the uplink subband and may also receive the uplink data sent by the terminal on the frequency domain resource(s), configured for slot#4, other than the uplink subband.

In the 9th symbol, the first transmission direction being UL is different from the second transmission direction being DL. In the 10th symbol, the first transmission direction being UL is different from the second transmission direction being flexible. Thus, the frequency domain resource(s) that is/are able to be used for the uplink communication in the 10th and 11th symbols is/are the uplink subband. That is, in the 10th and 11th symbols, the network device may receive the uplink data sent by the terminal only within the uplink subband and cannot use the frequency domain resource(s) outside the uplink subband to receive the uplink data sent by the terminal.

Accordingly, when the second transmission direction of the time domain unit where the subband of the first transmission direction is located is the same as the first transmission direction, all frequency domain resources configured for the time domain unit may be used for the communication of the first transmission direction. For example, in embodiments illustrated in FIG. 8B, in performing the uplink communication in the 11th symbol, all frequency domain resources configured for the 11th symbol may be used for the uplink communication, and the uplink communication is not limited to being performed on the frequency domain resource(s) corresponding to the uplink subband. Accordingly, the frequency domain resources corresponding to the 11th symbol may be fully utilized, which is conducive to improving scheduling flexibility and communication efficiency.

FIG. 8C is a schematic diagram illustrating an interaction between a terminal and a network device according to an embodiment of the disclosure.

As illustrated in FIG. 8C, the network device may send the configuration information of the time domain unit and the configuration information of the subband to the terminal. Correspondingly, the terminal receives the configuration information of the time domain unit and the configuration information of the subband sent by the network device.

The terminal determines, based on the configuration information of the time domain unit and the configuration information of the subband sent by the network device, the first transmission direction of the subband and the second transmission direction of the time domain unit where the subband is located.

The terminal determines, based on the first transmission direction of the subband and the second transmission direction of the time domain unit where the subband is located, frequency domain resource(s) that is/are able to be used for the communication of the first transmission direction in the time domain unit.

In an example, when the first transmission direction of the subband and the second transmission direction of the time domain unit where the subband is located are the same, the terminal may determine that the frequency domain resource(s) that is/are able to be used for the communication of the first transmission direction in the time domain unit include(s) all frequency domain resources configured for the time domain unit.

For example, the first transmission direction is uplink and the second transmission direction is uplink. The terminal may determine that the first transmission direction is the same as the second transmission direction and further determine that the resource(s) that is/are able to be used for the uplink transmission in the time domain unit include(s) all frequency domain resources configured for the time domain unit. Correspondingly, within the time domain unit, the network device may schedule the terminal to perform the uplink transmission on all frequency domain resources configured for the time domain unit.

For example, the first transmission direction is downlink and the second transmission direction is downlink. The terminal may determine that the first transmission direction is the same as the second transmission direction and further determine that the resource(s) that is/are able to be used for the downlink transmission in the time domain unit include(s) all frequency domain resources configured in the time domain unit. Correspondingly, within the time domain unit, the network device may schedule the terminal to perform the downlink transmission on all frequency domain resources configured for the time domain unit.

In an example, when the first transmission direction of the subband and the second transmission direction of the time domain unit where the subband is located are different, the terminal may determine that frequency domain resource(s) that is/are able to be used for the communication on the first transmission direction in the time domain unit include(s) the subband.

For example, the first transmission direction is uplink and the second transmission direction is downlink. The terminal may determine that the first transmission direction is different from the second transmission direction and further determine that in the time domain unit, only the uplink subband is able to be used for the uplink transmission. Correspondingly, within the time domain unit, the network device may schedule the terminal for the uplink transmission only within the uplink subband.

For example, the first transmission direction is uplink and the second transmission direction is flexible. The terminal may determine that the first transmission direction is different from the second transmission direction and further determine that in the time domain unit, only the uplink subband is able to be used for the uplink transmission. Correspondingly, within the time domain unit, the network device may schedule the terminal for the uplink transmission only within the uplink subband.

For example, the first transmission direction is downlink and the second transmission direction is uplink. The terminal may determine that the first transmission direction is different from the second transmission direction and further determine that in the time domain unit, only the downlink subband is able to be used for the downlink transmission. Correspondingly, within the time domain unit, the network device may schedule the terminal for the downlink transmission only within the downlink subband.

For example, the first transmission direction is downlink and the second transmission direction is flexible. The terminal may determine that the first transmission direction is different from the second transmission direction and further determine that in the time domain unit, only the downlink subband is able to be used for the downlink transmission. Correspondingly, within the time domain unit, the network device may schedule the terminal for the downlink transmission only within the downlink subband.

In an example, the network device sending the configuration information of the time domain unit to the terminal includes:
sending a first semi-static signaling to the terminal.

Then, the terminal determines, based on the first semi-static signaling, the second transmission direction of the time domain unit where the subband is located.

For example, the network device may configure the time division duplexing structure for the terminal through the first semi-static signaling. The time division duplexing structure may indicate transmission direction(s) of one or more time domain units configured for the terminal, such that the terminal may determine the transmission direction of the time domain unit based on the time division duplexing structure. For example, the time division duplexing structure configured for the terminal may indicate the transmission direction(s) of at least one time domain unit in time domain resources of the terminal.

In some example, the network device sending the configuration information of the time domain unit to the terminal further includes:
sending a second semi-static signaling or a dynamic indication to the terminal, after sending the first semi-static signaling to the terminal.

Then, the terminal determines, based on the first semi-static signaling and the second semi-static signaling or the dynamic indication, the second transmission direction of the time domain unit where the subband is located.

For example, the time division duplexing structure configured by the network device for the terminal through the first semi-static signaling may be adjusted. For example, after the network device configures the first time division duplexing structure for the terminal through the first semi-static configuration, the time division duplexing structure may be adjusted through the second semi-static signaling sent to the terminal or through dynamic indication information sent to the terminal.

It is noteworthy that after the network device sends the configuration information of the time domain unit and the configuration information of the subband to the terminal, the network device may also determine, based on the configuration information of the time domain unit and the configuration information of the subband, the first transmission direction of the subband configured for the terminal and the second transmission direction of the time domain unit where the subband is located.

For example, the first transmission direction is uplink and the second transmission direction is uplink. The network device may determine that the first transmission direction is the same as the second transmission direction. Within the time domain unit, the network device may schedule the terminal on all frequency domain resources configured for the time domain unit for the uplink transmission.

For example, the first transmission direction is downlink and the second transmission direction is downlink. The network device may determine that the first transmission direction is the same as the second transmission direction. Within the time domain unit, the network device may schedule the terminal on all frequency domain resources configured for the time domain unit for the downlink transmission.

For example, the first transmission direction is uplink and the second transmission direction is downlink. The network device may determine that the first transmission direction is different from the second transmission direction. Within the time domain unit, the network device may schedule the terminal for the uplink transmission only within the uplink subband.

For example, the first transmission direction is uplink and the second transmission direction is flexible. The network device may determine that the first transmission direction is different from the second transmission direction. Within the time domain unit, the network device may schedule the terminal for the uplink transmission only within the uplink subband.

For example, the first transmission direction is downlink and the second transmission direction is uplink. The network device may determine that the first transmission direction is different from the second transmission direction. Within the time domain unit, the network device may schedule the terminal for the downlink transmission only within the downlink subband.

For example, the first transmission direction is downlink and the second transmission direction is flexible. The network device may determine that the first transmission direction is different from the second transmission direction. Within the time domain unit, the network device may schedule the terminal for the downlink transmission only within the downlink subband.

It is noteworthy that for other contents involved in embodiments of the disclosure, please refer to the description of the relevant contents in previous embodiments, which will not be repeated here.

Corresponding to the aforementioned embodiments of the methods for determining a resource, the disclosure also provides embodiments of apparatuses for determining a resource.

FIG. 13 is a block diagram illustrating an apparatus for determining a resource according to an embodiment of the disclosure. As illustrated in FIG. 9, the apparatus for determining a resource includes the following.

A processing module 1301 is configured to determine a time domain unit in which a subband of a first transmission direction is located, determine a second transmission direction of the time domain unit; and determine, based on the second transmission direction and the first transmission direction, frequency domain resource(s) that is/are able to be used for communication on the first transmission direction in the time domain unit.

In an embodiment, the processing module is configured to, in a case where the first transmission direction is the same as the second transmission direction, determine that the frequency domain resource(s) that is/are able to be used for the communication of the first transmission direction in the time domain unit include(s) all the frequency domain resources configured for the time domain unit; and/or in a case where the first transmission direction is different from the second transmission direction, determine that the frequency domain resource(s) that is/are able to be used for the communication of the first transmission direction in the time domain unit include(s) the subband.

In an embodiment, the time domain unit includes at least one of:
a slot for full-duplex communication; or
a symbol in a slot used for full-duplex communication.

In an embodiment, the first transmission direction being different from the second transmission direction includes at least one of:
the first transmission direction being downlink and the second transmission direction being uplink;
the first transmission direction being downlink and the second transmission direction being flexible;
the first transmission direction being uplink and the second transmission direction being downlink; or
the first transmission direction being uplink and the second transmission direction being flexible.

In an embodiment, the processing module is configured to determine a time division duplexing structure based on a first semi-static signaling sent by a network device; and determine a second transmission direction of the time domain unit based on the time division duplexing structure.

In an embodiment, the second semi-static signaling includes at least one of: a broadcast signaling; or an RRC signaling.

In an embodiment, the processing module is further configured to adjust the time division duplexing structure based on dynamic indication information or a second semi-static signaling sent by the network device; and determine the second transmission direction of the time domain unit based on an adjusted time division duplexing structure.

FIG. 14 is a block diagram illustrating an apparatus for determining a resource according to an embodiment of the disclosure. As illustrated in FIG. 10, the apparatus for determining a resource includes the following.

A processing module 1401 is configured to determine a time domain unit in which a subband of a first transmission direction configured for a terminal is located, determine a second transmission direction of the time domain unit; and determine, based on the second transmission direction and the first transmission direction, frequency domain resource(s) that is/are able to be used for communication of the first transmission direction with the terminal in the time domain unit.

In an embodiment, the processing module is configured to, in a case where the first transmission direction is the same as the second transmission direction, determine that the frequency domain resource(s) that is/are able to be used for the communication of the first transmission direction with the terminal in the time domain unit include(s) all the frequency domain resources configured for the time domain unit; and/or in a case where the first transmission direction is different from the second transmission direction, determine that the frequency domain resource(s) that is/are able to be used for the communication of the first transmission direction with the terminal in the time domain unit include(s) the subband.

In an embodiment, the time domain unit includes at least one of:
a slot for full-duplex communication; or
a symbol in a slot for full-duplex communication.

In an embodiment, the first transmission direction being different from the second transmission direction includes at least one of:
the first transmission direction being downlink and the second transmission direction being uplink;
the first transmission direction being downlink and the second transmission direction being flexible;
the first transmission direction being uplink and the second transmission direction being downlink; or
the first transmission direction being uplink and the second transmission direction being flexible.

In an embodiment, the apparatus further includes: a sending module 1401 configured to send a first semi-static signaling to the terminal. The first semi-static signaling is configured to configure a time division duplexing structure. The time division duplexing structure indicates a second transmission direction of the time domain unit.

In an embodiment, the first semi-static signaling includes at least one of: a broadcast signaling; or an RRC signaling.

In an embodiment, the apparatus further includes: a sending module 1401 configured to send dynamic indication information or a second semi-static signaling to the terminal. The dynamic indication information or the second semi-static signaling is used for adjusting the time division duplexing structure. The processing module 1301 is further configured to determine the second transmission direction of the time domain unit based on an adjusted time division duplexing structure.

As for apparatus embodiments, since they basically correspond to method embodiments, the relevant parts may be referred to the partial description of method embodiments. The apparatus embodiments described above are merely illustrative, in which the modules described as separate components may or may not be physically separated, and the components shown as modules may or may not be physical modules. That is, they may be located in one place or distributed on multiple network modules. Some or all of the modules may be selected based on actual needs to achieve the purpose of the schemes of the disclosure. Those skilled in the art may understand and implement the disclosure without creative work.

Embodiments of the disclosure further provide a system for determining a resource. The system includes a terminal and a network device. The terminal is configured to implement the methods for determining a resource performed by the terminal as described in any of above embodiments. The network device is configured to implement the methods for determining a resource performed by the network device as described in any of above embodiments.

Embodiments of the disclosure further provide a communication device. The communication device includes: a processor and a memory for storing a computer program. When the computer program is executed by the processor, the methods for determining a resource performed by the terminal as described in any of above embodiments are implemented.

Embodiments of the disclosure further provide a communication device. The communication device includes a processor and a memory for storing a computer program. When the computer program is executed by the processor, the methos for determining a resource performed by the network device as described in any of above embodiments are implemented.

Embodiments of the disclosure further provide a computer-readable storage medium having a computer program stored thereon. When the computer program is executed by a processor, the methods for determining a resource performed by the terminal as described in any of above embodiments are implemented.

Embodiments of the disclosure further provide a computer-readable storage medium having a computer program stored thereon. When the computer program is executed by a processor, the methods for determining a resource performed by the network device as described in any of above embodiments are implemented.

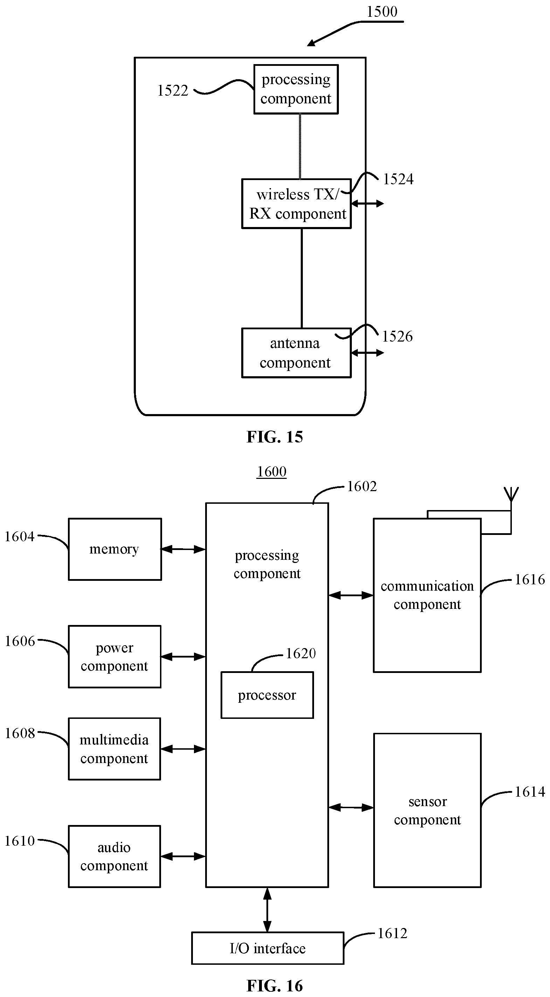

FIG. 15 is a block diagram illustrating a device 1500 for determining a resource according to an embodiment of the disclosure. The device 1500 may be a base station. As illustrated in FIG. 15, the device 1500 includes a processing component 1522, a wireless transmission/reception component 1524, an antenna component 1526, and a signal processing part specific to a wireless interface. The processing component 1522 may further include one or more processors. One of the processors in the processing component 1522 may be configured to implement the methods for determining a resource performed by the network device as described in any of above embodiments.

FIG. 16 is a block diagram illustrating a device 1600 for determining a resource according to an embodiment of the disclosure. For example, the device 1600 may be a terminal, such as a mobile phone, a computer, a digital broadcast terminal, a messaging device, a game console, a tablet device, a medical device, a fitness device, a personal digital assistant, or the like.

As illustrated in FIG. 16, the device 1600 may include one or more of the following components: a processing component 1602, a memory 1604, a power component 1606, a multimedia component 1608, an audio component 1610, an input/output (I/O) interface 1612, a sensor component 1614, and a communication component 1616.

The processing component 1602 generally controls the overall operation of the device 1600, such as operations associated with display, phone calls, data communications, camera operations, and recording operations. The processing component 1602 may include one or more processors 1620 to execute instructions to implement all or part of the blocks in the methods for determining a resource performed by the terminal as described in any of above embodiments. In addition, the processing component 1602 may include one or more modules to facilitate interaction between the processing component 1602 and other components. For example, the processing component 1602 may include a multimedia module to facilitate interaction between the multimedia component 1608 and the processing component 1602.

The memory 1604 is configured to store various types of data to support operations on the device 1600. Examples of such data include instructions for any application or method operating on the device 1600, contact data, phonebook data, messages, pictures, videos, etc.

The power component 1606 provides power to various components of the device 1600. The power component 1606 may include a power management system, one or more power supplies, and other components associated with generating, managing, and distributing power to the device 1600.

The multimedia component 1608 includes a screen that provides an output interface between the device 1600 and the user. In some embodiments, the screen may include a liquid crystal display (LCD) and a touch panel (TP). If the screen includes a touch panel, the screen may be implemented as a touch screen to receive input signals from the user.

The audio component 1610 is configured to output and/or input audio signals. For example, the audio component 1610 includes a microphone (MIC), which is configured to receive external audio signals when the device 1600 is in an operation mode, such as a call mode, a recording mode, and a speech recognition mode. The received audio signal may be further stored in the memory 1604 or sent via the communication component 1616. In some embodiments, the audio component 1610 also includes a speaker for outputting audio signals.

The I/O interface 1612 provides an interface between the processing component 1602 and peripheral interface modules, such as keyboards, click wheels, buttons, etc. These buttons may include, but are not limited to, a home button, a volume button, a start button, or a lock button.

The sensor component 1614 includes one or more sensors for providing status assessment of various aspects of the device 1600.

The communication component 1616 is configured to facilitate wired or wireless communication between the device 1600 and other devices. The device 1600 may access a wireless network based on a communication standard, such as WiFi^{™}, 2G, 3G, 4G LTE, 5G NR, or a combination thereof. In an embodiment, the communication component 1616 receives a broadcast signal or broadcast-related information from an external broadcast management system via a broadcast channel. In an embodiment, the communication component 1616 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology, or other technologies.

In an embodiment, the device 1600 may be implemented by one or more applicationspecific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the methods for determining a resource performed by the terminal as described in any of above embodiments.

In an embodiment, a non-transitory computer-readable storage medium including instructions is further provided, such as a memory 1604 including instructions. The instructions may be executed by the processor 1620 of the device 1600 to complete the methods for determining a resource performed by the terminal as described in any of above embodiments. For example, the non-transitory computer-readable storage medium may be a ROM, a random access memory (RAM), a CD-ROM, a magnetic tape, a floppy disk, an optical data storage device, etc.

Other embodiments of the disclosure will be readily apparent to those skilled in the art after considering the specification and practicing the disclosure herein. Thet disclosure is intended to cover any variations, uses, or adaptations of the disclosure that follow the general principles of the disclosure and include common knowledge or customary technical means in the art that are not disclosed in the disclosure. The specification and examples are to be regarded as examples only, and the true scope and spirit of the disclosure is indicated by the appended claims.

It is understandable that the disclosure is not limited to the precise structures described above and shown in the drawings, and that various modifications and changes may be made without departing from the scope thereof. The scope of the disclosure is limited only by the appended claims.

## Claims

1. A method for determining a resource, performed by a terminal, the method comprising:
determining a time domain unit in which a subband of a first transmission direction is located, and determining a second transmission direction of the time domain unit; and
determining, based on the second transmission direction and the first transmission direction, a frequency domain resource that is able to be used for communication of the first transmission direction in the time domain unit.

2. The method of claim 1, wherein determining, based on the second transmission direction of the time domain unit and the first transmission direction, the frequency domain resource that is able to be used for the communication of the first transmission direction in the time domain unit comprises:
in a case where the first transmission direction is the same as the second transmission direction, determining that the frequency domain resource that is able to be used for the communication of the first transmission direction in the time domain unit comprises all frequency domain resources configured for the time domain unit; and/or
in a case where the first transmission direction is different from the second transmission direction, determining that the frequency domain resource that is able to be used for the communication of the first transmission direction in the time domain unit comprises the subband.

3. The method of claim 1 or 2, wherein the time domain unit includes at least one of:
a slot for full-duplex communication; or
a symbol in a slot for full-duplex communication.

4. The method of claim 2 or 3, wherein the first transmission direction being different from the second transmission direction comprises at least one of:
the first transmission direction being downlink and the second transmission direction being uplink;
the first transmission direction being downlink and the second transmission direction being flexible;
the first transmission direction being uplink and the second transmission direction being downlink; or
the first transmission direction being uplink and the second transmission direction being flexible.

5. The method of any one of claims 1 to 4, wherein determining the second transmission direction of the time domain unit comprises:
determining a time division duplexing structure based on a first semi-static signaling sent by a network device; and
determining the second transmission direction of the time domain unit based on the time division duplexing structure.

6. The method of claim 5, wherein the first semi-static signaling comprises at least one of:
a broadcast signaling; or
a Radio Resource Control signaling.

7. The method of claim 5 or 6, wherein determining the second transmission direction of the time domain unit further comprises:
adjusting the time division duplexing structure based on dynamic indication information or a second semi-static signaling sent by the network device; and
determining the second transmission direction of the time domain unit based on an adjusted time division duplexing structure.

8. A method for determining a resource, performed by a network device, the method comprising:
determining a time domain unit in which a subband of a first transmission direction configured for a terminal is located, and determining a second transmission direction of the time domain unit; and
determining, based on the second transmission direction and the first transmission direction, a frequency domain resource that is able to be used for communication of the first transmission direction with the terminal in the time domain unit.

9. The method of claim 8, wherein determining, based on the second transmission direction of the time domain unit and the first transmission direction, the frequency domain resource that is able to be used for the communication of the first transmission direction with the terminal in the time domain unit comprises:
in a case where the first transmission direction is the same as the second transmission direction, determining that the frequency domain resource that is able to be used for the communication of the first transmission direction with the terminal in the time domain unit comprises all frequency domain resources configured for the time domain unit; and/or
in a case where the first transmission direction is different from the second transmission direction, determining that the frequency domain resource that is able to be used for the communication of the first transmission direction with the terminal in the time domain unit comprises the subband.

10. The method of claim 8 or 9, wherein the time domain unit comprises at least one of:
a slot for full-duplex communication; or
a symbol in a slot for full-duplex communication.

11. The method of claim 9 or 10, wherein the first transmission direction being different from the second transmission direction comprises at least one of:
the first transmission direction being downlink and the second transmission direction being uplink;
the first transmission direction being downlink and the second transmission direction being flexible;
the first transmission direction being uplink and the second transmission direction being downlink; or
the first transmission direction being uplink and the second transmission direction being flexible.

12. The method of any one of claims 8 to 11, further comprising:
sending a first semi-static signaling to the terminal, wherein the first semi-static signaling is configured to configure a time division duplexing structure, and the time division duplexing structure indicates the second transmission direction of the time domain unit.

13. The method of claim 12, wherein the first semi-static signaling comprises at least one of:
a broadcast signaling; or
a Radio Resource Control signaling.

14. The method of claim 12 or 13, further comprising:
sending dynamic indication information or a second semi-static signaling to the terminal, wherein the dynamic indication information or the second semi-static signaling is used for adjusting the time division duplexing structure; and
determining the second transmission direction of the time domain unit based on an adjusted time division duplexing structure.

15. An apparatus for determining a resource, comprising:
a processing module, configured to determine a time domain unit where a subband of a first transmission direction is located, and determine a second transmission direction of the time domain unit; and determine, based on the second transmission direction and the first transmission direction, a frequency domain resource that is able to be used for communication of the first transmission direction in the time domain unit.

16. An apparatus for determining a resource, comprising:
a processing module, configured to determine a time domain unit in which a subband of a first transmission direction configured for a terminal is located, and determine a second transmission direction of the time domain unit; and determine, based on the second transmission direction and the first transmission direction, a frequency domain resource that is able to be used for communication of the first transmission direction with the terminal in the time domain unit.

17. A system for determining a resource, comprising a terminal and a network device, wherein the terminal is configured to implement the method for determining a resource of any one of claims 1 to 7, and the network device is configured to implement the method for determining a resource of any one of claims 8 to 14.

18. A communication device, comprising:
a processor; and
a memory for storing a computer program;
wherein when the computer program is executed by a processor, the method for determining a resource of any one of claims 1 to 7 is implemented.

19. A communication device, comprising:
a processor; and
a memory for storing a computer program;
wherein when the computer program is executed by a processor, the method for determining a resource of any one of claims 8 to 14 is implemented.

20. A computer-readable storage medium having a computer program stored thereon, wherein when the computer program is executed by a processor, the method for determining a resource of any one of claims 1 to 7 is implemented.

21. A computer-readable storage medium having a computer program stored thereon, wherein when the computer program is executed by a processor, the method for determining a resource of any one of claims 8 to 14 is implemented.
